# EUROPÄISCHE PATENTSCHRIFT

(11) **EP 1 566 069 B1**
(45) Veröffentlichungstag und Bekanntmachung des Hinweises auf die Patenterteilung: **03.05.2006**
(21) Anmeldenummer: 03767524.6
(22) Anmeldetag: 08.11.2003
(51) Int. Cl.: H04Q 7/34

(54) **TESTSYSTEM ZUR PRÜFUNG VON ÜBERTRAGUNGSVORGÄNGEN INNERHALB EINES MOBILFUNKNETZES SOWIE VERFAHREN ZUR AUTHENTISIERUNG EINES MOBILTELEFONS UNTER VERWENDUNG EINES DERARTIGEN TESTSYSTEMS**
TEST SYSTEM FOR CHECKING TRANSMISSION PROCESSES IN A MOBILE RADIO NETWORK, AND METHOD FOR AUTHENTICATING A MOBILE TELEPHONE USING ONE SUCH TEST SYSTEM
SYSTEME DE TEST SERVANT A VERIFIER DES PROCESSUS DE TRANSMISSION AU SEIN D'UN RESEAU DE TELEPHONIE MOBILE ET PROCEDE D'AUTHENTIFICATION D'UN TELEPHONE MOBILE A L'AIDE D'UN SYSTEME DE TEST DE CE TYPE

(30) Priorität: 28.11.2002 DE 10255428
(43) Veröffentlichungstag der Anmeldung: 24.08.2005
(73) Patentinhaber: Sigos Systemintegration GmbH, 90411 Nürnberg (DE)
(72) Erfinder: LÖHLEIN, Martin, 90530 Wendelstein (DE); BANKEN, Hans, 91126 Schwabach (DE); BERGMANN, Reinhard, 91126 Schwabach (DE)
(74) Vertreter: Hofmann, Matthias
(86) Internationale Anmeldenummer: PCT/EP2003/012492
(87) Internationale Veröffentlichungsnummer: WO 2004/049746

(56) Entgegenhaltungen:
- EP-A- 1 094 678
- WO-A-02/069656
- DE-C- 19 831 929

## Beschreibung

Die Erfindung betrifft ein Testsystem zur Prüfung von Übertragungsvorgängen innerhalb eines Mobilfunknetzes. Ferner betrifft die Erfindung ein Verfahren zur Authentisierung eines Mobiltelefons unter Verwendung eines Testsystems.

Im Bereich der Telekommunikation kann für den Endnutzer eine hohe Qualität und Funktionalität des Mobilfunknetzes nur dann garantiert werden, wenn die Komponenten des Mobilfunknetzes, also Vermittlungsrechner, Mobiltelefone und Übertragungsstationen, sowie die Kommunikation zwischen diesen regelmäßig getestet werden. Neben den Tests der Hardwarekomponenten des Mobilfunknetzes sollen im Rahmen derartiger Tests auch Softwaretests und Softwareupdates durchgeführt werden. Auch Roaming-Tests, das heißt Tests zu der vertraglich gesicherten Nutzung von Fremd-Mobilfunknetzen im In- beziehungsweise Ausland, müssen regelmäßig durchgeführt werden. Roaming-Tests sind standardisiert und müssen immer dann durchgeführt werden, wenn ein Netzbetreiber neue Netz-Kooperationen eingeht oder sich der Status bestehender Netz-Kooperationen ändert. Standardisierte Tests werden auch im Falle von Fehlermeldungen durchgeführt, sowie bei einer Erweiterung oder Änderung des Funktionsumfangs des Mobilnetzes. Daneben werden individuelle Tests, die Erweiterungen bestehender Standards sein können oder auch völlig auf die Bedürfnisse eines Netzbetreibers zugeschnitten sind, durchgeführt, sodass eine maximale Funktionssicherheit für den Endbenutzer gewährleistet ist. Gleichzeitig wird durch einen regelmäßigen Testbetrieb die durchschnittliche Verfügbarkeit des Mobilfunknetzes erhöht. Die vorstehend genannten Tests sind aber, wenn sie manuell durch Verbringen eines Mobiltelefons an einen Testort und Durchtesten verschiedener mit dem Mobiltelefon zusammenarbeitender Subscriber Identification Module (SIM) durchgeführt werden, aufwendig und binden viel Personal. Deswegen finden diese Tests in der Regel automatisiert statt. Komponenten zugehöriger Testsysteme müssen zum Test lokaler Standorte meist über große Flächen verteilt und über eine entsprechende Netz-Infrastruktur (LAN/WAN) des Betreibers miteinander verbunden sein. Für bestimmte vom Markt her bekannte Tests an den jeweiligen Standorten müssen Testschnittstellen, welche Mobiltelefone sind oder diese nachbilden, mit einer entsprechenden SIM-Karte bestückt sein. Im Rahmen dieser Tests, unabhängig davon, ob es sich um einen Standardtest oder um einen betreiberspezifischen Test handelt, muss in der Regel eine Mehrzahl von SIM-Karten an einem Standort getestet werden. Die Anzahl der Karten hängt von der Anzahl der zu testenden Mobilfunknetze und vom Typ des jeweiligen Tests ab.

Ein weiteres Testsystem ist bekannt aus der DE 198 31 929 C1. Dort ist ein zentraler Steuerrechner vorgesehen, der SIM-Karten, mit denen die Mobiltelefone innerhalb des Testsystems zusammenarbeiten, aufnimmt und die Testverbindung der SIM-Karten mit den Mobiltelefonen als Fern-Signalverbindung steuert. Mit einem derartigen Testsystem ist ein Test einer Mehrzahl von SIM-Karten möglich, ohne diese am Ort des Mobiltelefons austauschen zu müssen. Bei dem Testsystem der DE 198 31 929 C1 werden Daten der SIM-Karten während des Testens über die Fern-Signalverbindung übertragen. Durch die große Zahl der Kommunikationsschritte zwischen dem Mobiltelefon und der SIM-Karte (z. B. beim Auslesen des Telefonbuchs auf der SIM-Karte) und die Verzögerung, die durch die Übertragung über die Fern-Signalverbindung (Round-Trip-Delay) entsteht, dauert das Testen insbesondere für eine Mehrzahl von SIM-Karten sehr lange. Außerdem stellt die Übertragung der Daten über die Fern-Signal-verbindung ein Sicherheitsrisiko dar. Zudem ist die Testgeschwindigkeit durch die von den SIM-Karten maximal erreichbare Datenübertragungsbandbreite und durch die interne Prozessorleistung der SIM-Karten begrenzt. Die Authentisierung eines Mobiltelefons, also die Identifikation dieses Mobiltelefons durch das Netz, ist zeitkritisch. Sie hat nach einem festgelegten Kommunikationsprotokoll stattzufinden, welches z. B. im internationalen Standard ISO 7816 Teil 3 festgelegt ist. Durch die Verzögerung bei der Übertragung über die Fern-Signalverbindung kann die Authentisierung fehlschlagen.

Aus der WO 02/069656 A2 ist ein Testsystem zur Überprüfung von Übertragungsvorgängen innerhalb eines Mobilfunknetzes bekannt. Dabei kommen als lokale Testeinheiten Module zum Einsatz, welche Standardfunktionen eines Mobiltelefons aufweisen. Das Testsystem weist den lokalen Testeinheiten zugeordnete lokale Übertragungseinheiten auf. Die lokalen Testeinheiten beinhalten eine virtuelle SIM-Karte. Zur Steuerung des Test-ablaufs dient ein zentraler Steuerrechner, der über Terminals angesprochen werden kann. Ausgehend von diesem zentralen Rechner findet auch die Authentisierung der lokalen Testeinheiten statt.

Ein weiteres Testsystem zur Überprüfung von Übertragungsvorgängen ist aus der EP 1 094 678 A1 bekannt.

Es ist eine erste Aufgabe der vorliegenden Erfindung, ein Testsystem zur Überprüfung von Übertragungsvorgängen, insbesondere der Luftschnittstellen und der Teilnehrnerschnittstellen, innerhalb eines Mobilfunknetzes derart weiterzubilden, dass Tests mit einer Mehrzahl von zu verschiedenen SIM-Karten gehörenden SIM-Datensätzen mit geringerem Aufwand durchgeführt werden können.

Diese Aufgabe ist erfindungsgemäß gelöst durch ein Testsystem mit den im Anspruch 1 angegebenen Merkmalen.

Erfindungsgemäß wurde erkannt, dass es zum Test von Übertragungsvorgängen innerhalb eines Mobilfunknetzes nicht zwingend erforderlich ist, mit "physikalischen", also realen SIM-Karten zu arbeiten. Diese physikalischen SIM-Karten werden, jedenfalls was die dem Mobiltelefon lokal zugeordneten SIM-Daten angeht, durch eine SIM-Simulation eines SIM-Simulationsrechners, also durch eine "virtuelle" SIM-Karte, ersetzt. Dies ermöglicht es, Kartendaten zu einer Mehrzahl verschiedener SIM-Karten lokal zu testen, ohne die Karten lokal gegeneinander manuell austauschen zu müssen. Gleichzeitig wird die Übertragung sensibler SIM-Daten über zentrale Komponenten des Mobilfunknetzes vermieden, wie bei einer zentralen Verwaltung physikalischer SIM-Karten der Fall. Da der SIM-Simulationsrechner und auch der Authentisierungsrechner hinsichtlich ihres Platz- und Leistungsbedarfs nicht den gleichen Limitierungen wie eine SIM-Karte unterliegen, können sie hinsichtlich ihrer Rechen- und Kommunikationsleistung sehr leistungsfähig ausgerührt sein. Gleichzeitig kann auf die hinsichtlich ihrer Rechen- und Kommunikationsleistung relativ beschränkte physikalische SIM-Karte weitgehend oder ganz verzichtet werden. Dies führt zu einer deutlichen Erhöhung des Datendurchsatzes im Zuge des Testens eines Satzes von SIM-Daten. Die Anordnung des SIM-Simulationsrechners lokal, das heißt benachbart zum Testort des Mobiltelefons, ermöglicht mit relativ geringem Aufwand eine hohe Übertragungsbandbreite zwischen dem Simulationsrechner und dem Mobiltelefon. Der SIM-Simulationsrechner, in dem SIM-Daten zu einer Mehrzahl von SIM-Karten abgelegt sind, erhöht die Flexibilität des Testsystems. Es kann ein Testsatz von SIM-Daten auf dem Simulationsrechner abgelegt sein, welcher im Rahmen eines Testlaufs mit einem zugeordneten Mobiltelefon routinemäßig abgearbeitet wird. Dies kann vollautomatisch erfolgen.

Das erfindungsgemäße Testsystem kann zum Beispiel bei Mobilfunknetzen vom Typ GSM, GPRS oder UMTS eingesetzt sein. Der Begriff "SIM-Karte" wird daher stellvertretend sowohl für SIM-Karten als auch für entsprechende Datenkarten anderer Typen von Mobilfunknetzen verwendet.

Eine Ausgestaltung des Testsystems nach Anspruch 2 ist insbesondere dann von Vorteil, wenn der Authentisierungsrechner als zentrale Komponente ausgelegt ist. Das Mobilfunknetz wird auf diese Weise zusätzlich zur Datenanbindung des Authentisierungsrechners genutzt. Die Datenkommunikation zwischen dem Simulationsrechner und dem Authentisierungsrechner kann hierdurch ebenfalls mit hoher Übertragungsbandbreite erfolgen.

Mit Hilfe einer Ausgestaltung des SIM-Simulationsrechners nach Anspruch 3 kann der Ablauf eines Tests beeinflusst werden. Insbesondere können Struktur und Inhalt der Information der simulierten virtuellen SIM-Karte unterschiedlich zu denen auf der physikalischen SIM-Karte sein. Insbesondere lässt sich durch entsprechende Wahl der simulierten (virtuellen) SIM-Karte die Ablaufgeschwindigkeit der Tests deutlich erhöhen. Außerdem lassen sich auch zukünftige SIM-Kartenmodelle, zu denen noch keine physikalischen SIM-Karten vorliegen, hinsichtlich ihrer Auswirkungen auf die Datenkommunikation innerhalb des Mobilfunknetzes testen. Dies erhöht die Flexibilität des Testsystems.

Ein SIM-Simulationsrechner gemäß Anspruch 4 führt zu einer weiteren Optimierung der Anwendungsflexibilität des Testsystems. Hierdurch lassen sich zum Beispiel Anordnungen realisieren, bei denen der SIM-Simulationsrechner immer auf den Authentisierungsrechner und/oder auf das Mobiltelefon innerhalb des Testsystems zugreift, welche gerade nicht ausgelastet sind.

Entsprechendes gilt für die Ausgestaltung eines Authentisierungsrechners nach Anspruch 5.

Mit Hilfe eines Authentisierungsrechners nach Anspruch 6 lässt sich die Vielfalt der mit Hilfe des Testsystems durchführbaren Mobilfunknetztests weiter vergrößern. Neben Standard-Authentisierungsalgorithmen können auch betreiberindividuelle Algorithmen implementiert sein.

Ein Authentisierungsrechner nach Anspruch 7 bedient sich zur Berechnung einer Authentisierungs-Antwortgröße einer physikalischen SIM-Karte. Die Authentisierung durch die physikalische SIM-Karte ist für die SIM-Simulation erforderlich, wenn das Mobilfunknetz eine Authentisierung anfordert, die ohne die SIM-Karte selbst nicht berechnet werden kann.

Eine weitere Aufgabe der vorliegenden Erfindung ist es, ein im Rahmen des Tests eines Mobilfunknetzes hinsichtlich der Abarbeitungszeit schnelleres Authentisierungsverfahren für ein Mobiltelefon anzugeben.

Diese Aufgabe ist erfindungsgemäß gelöst durch ein Verfahren mit den in Anspruch 8 angegebenen Schritten.

Die Anzahl von Kommunikationsschritten über eine Fern-Signalverbindung wird durch das erfindungsgemäße Verfahren minimiert. Mit dem Verfahren werden für die Authentisierung nur zwei Kommunikationsschritte über die Fern-Signalverbindung benötigt, obwohl für die Kommunikation zwischen Mobiltelefon und SIM-Karte gemäß ISO 7816 Teil 3 dazu vier Kommunikationsschritte erforderlich sind. Beim erfindungsgemäßen Verfahren erfolgt die Berechnung der Authentisierungs-Antwortgröße SRES+K_{c} aus dem RAND und mindestens einer weiteren, der SIM-Simulation individuell zugeordneten Kenngröße im Authentisierungsrechner.

Ein Ausführungsbeispiel der Erfindung wird nachfolgend anhand der Zeichnung näher erläutert. In dieser zeigen:
- Fig. 1: ein erfindungsgemäßes Testsystem zur Überprüfung von Übertragungsvorgängen innerhalb eines Mobilfunknetzes in einer schematischen Blockdarstellung;
- Fig. 2: ein Verfahren zur Authentisierung eines Mobiltelefons nach dem Stand der Technik; und
- Fig. 3: ein erfindungsgemäßes Verfahren zur Authentisierung eines Mobiltelefons.

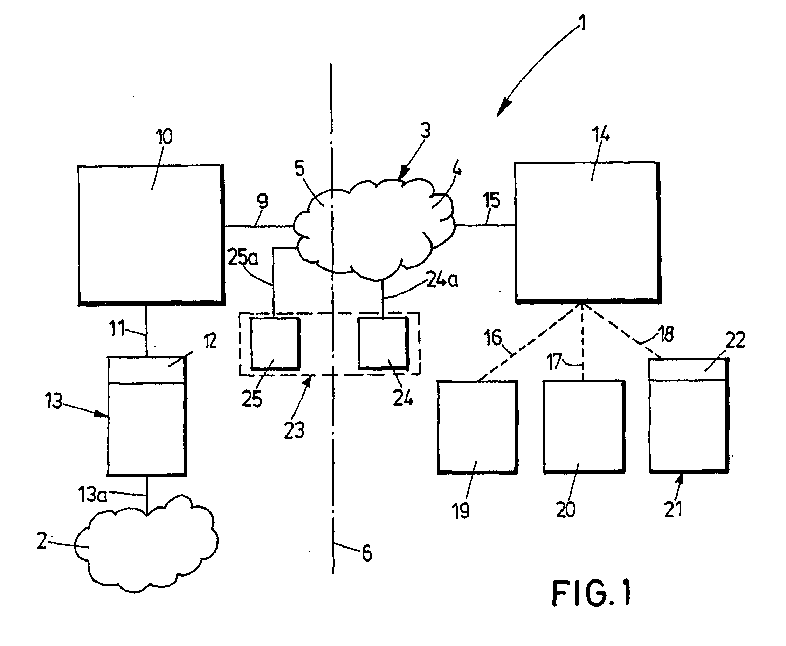

Fig. 1 zeigt ein insgesamt mit dem Bezugszeichen 1 bezeichnetes Testsystem zur Prüfung von Übertragungsvorgängen innerhalb eines Mobilfunknetzes 2. Das Testsystem umfasst zur Datenkommunikation als Übertragungsstation ein Netz 3 aus miteinander in bekannter Weise in Signalverbindung stehenden Übertragungseinheiten. Diese können hinsichtlich ihres Standortes klassifiziert werden in zentrale Übertragungseinheiten 4 und in dezentrale, lokale Übertragungseinheiten 5, die in Fig. 1 durch eine schematische Trennlinie 6 innerhalb des Netzes 3 voneinander getrennt sind. Fig. 1 zeigt, dass eine bestimmte lokale Übertragungseinheit 5 über einen Signalweg 9, zum Beispiel eine Ethernet-Verbindung, und einen Simulationsrechner 10, dessen Funktion noch beschrieben wird, sowie eine Signalleitung 11 mit einem Adaptermodul 12 eines Mobiltelefons 13 in Verbindung steht. Die Kommunikation zwischen dem Mobiltelefon 13 und dem Simulationsrechner 10 kann mit Hilfe einer normalen Bitstruktur (direct convention) oder wahlweise auch mit einer invertierten Bitstruktur (inverse convention) erfolgen. Das Mobiltelefon 13 steht über einen drahtlosen Signalweg 13, also eine Luftschnittstelle, mit dem Mobilfunknetz 2 in bekannter Weise in Verbindung.

Das Mobiltelefon 13 ist so ausgelegt, dass es unter Zuhilfenahme eines Subscriber Identification Moduls (SIM) sich beim Mobilfunknetz 2 identifizieren und zur Kommunikation innerhalb des Mobilfunknetzes 2 anmelden kann, also die Durchführung einer entsprechenden Authentisierung ermöglicht.

Die SIM-Technik, die hier stellvertretend für Datentechniken zur Identifizierung eines Mobiltelefons bei einem Mobilfunknetz diskutiert wird, ist an sich vom Markt her bekannt. Die Datenstruktur einer SIM-Karte ist in der Richtlinie ETS 300 977 (GSM 11.11) des European Telecommunications Standards Institute enthalten. Bei den bekannten Systemen steht das Mobiltelefon mit einer tatsächlich vorhandenen, also "physikalischen" SIM-Karte in Verbindung. Diese physikalische SIM-Karte ist entweder im Mobiltelefon integriert oder steht, wie dies bei bekannten Testsystemen der Fall ist, mit dem Mobiltelefon 13 über eine Fern-Signalverbindung in Verbindung.

Beim Testsystem 1 gemäß Fig. 1 kommt anstelle einer physikalischen SIM-Karte eine SIM-Simulation, also eine virtuelle SIM-Karte, zum Einsatz. Hierzu weist das Mobiltelefon 13 das SIM-Adaptermodul 12 und den SIM-Simulationsrechner 10 auf. Mit Hilfe dieser beiden Komponenten wird anstelle einer physikalischen SIM-Karte durch Übernahme der entsprechenden Datenstruktur eine SIM-Kartensimulation bereitgestellt. Das Mobiltelefon 13 kommuniziert daher über das Adaptermodul 12, welches seine Steuerinformationen vom Simulationsrechner 10 erhält, in identischer Weise, wie dies mit einer physikalischen SIM-Karte geschehen würde. Das Adaptermodul 12 wird also anstelle einer physikalischen SIM-Karte mit dem Mobiltelefon 13 verbunden, ohne dass am Mobiltelefon 13 im Vergleich zum Betrieb mit einer physikalischen SIM-Karte noch weitere Veränderungen erforderlich sind.

Über die vorstehend beschriebenen Komponenten hinaus umfasst das Testsystem 1 noch einen Authentisierungsrechner 14, der mit einer zentralen Übertragungseinheit 4 des Netzes 3 über eine Signalleitung 15 in Verbindung steht. Über Signalverbindungen 16, 17, 18 kommuniziert der Authentisierungsrechner 14 mit Algorithmus-Modulen 19, 20, 21. Mit dem Algorithmus-Modul 19 ist der an sich bekannte Authentisierungsalgorithmus MODULO durchführbar. Mit dem Algorithmus-Modul ist der ebenfalls an sich bekannte Authentisierungsalgorithmus XOR durchführbar. Beim Algorithmus-Modul 21 handelt es sich um eine physikalische SIM-Karte, welche zur Kommunikation mit dem Authentisierungsrechner 14 mit einem Kartenlese-Modul 22 verbunden ist. Die Algorithmus-Module 19 bis 21 können wahlweise zum Einsatz kommen.

Zur Steuerung eines Testlaufs des Testsystems 1 weist dieses einen Steuerrechner 23 auf. Letzterer umfasst ein zentrales Steuermodul 24 und ein lokales Steuermodul 25. Die Steuermodule 24, 25 können das Testsystem 1 unabhängig voneinander steuern. Das zentrale Steuermodul 24 ist über eine Signalleitung 24a mit einer zentralen Übertragungseinheit 4 des Netzes 3 verbunden. Das lokale Steuermodul 25 ist über eine Signalverbindung 25a mit der lokalen Übertragungseinheit 5 des Netzes 3 verbunden.

Beim Betrieb des Testsystems behandelt die SIM-Simulation lokal alle von dem Mobiltelefon an die SIM-Karte gerichteten Kommandos. Dazu kennt die SIM-Simulation alle in GSM 11.11 definierten Datenbereiche. Dazu gehören zum Beispiel das auf der SIM-Karte gespeicherte Telefonbuch sowie der Datenbereich für gesendete oder empfangene SMS (Short Message Service). Nach dem Einschalten liest das Mobiltelefon zunächst solche Informationen von der SIM-Karte. Da fast alle dieser Inhalte für die Testdurchführung nicht relevant sind, wird eine optimierte virtuelle SIM-Karte verwendet, die zum Beispiel nur sehr wenige leere Einträge für Telefonbuch oder SMS enthält

Eine besondere Bedeutung hat der Datenbereich für die IMSI (International Mobile Subscriber Identity). Diese IMSI ist dafür verantwortlich, dass sich das Mobiltelefon für den gewünschten Teilnehmer im Mobilfunknetz einbucht. Den Wert der IMSI der zu testenden SIM-Karte erhält die SIM-Simulation beim Start vom Steuerrechner 23.

Neben der IMSI enthält die SIM-Simulation keine weiteren persönlichen Daten von der SIM-Karte. Daher brauchen diese persönlichen Daten von der SIM-Karte nicht über die Fern-Signalverbindung übertragen werden.

Die Anzahl der Kommunikationsschritte zwischen Mobiltelefon und SIM-Simulation ist erheblich verringert, da zum Beispiel nicht ein Telefonbuch mit 100 Einträgen ausgelesen wird, sondern nur ein reduziertes Telefonbuch mit sehr wenigen Einträgen. Dadurch ergibt sich eine deutliche Erhöhung der Ausführungsgeschwindigkeit.

Eine weitere deutliche Erhöhung der Ausführungsgeschwindigkeit ergibt sich durch die Tatsache, dass die Kommunikationsschritte lokal zwischen Mobiltelefon und SIM-Simulation ausgeführt werden und nicht über die Fern-Signalverbindung übertragen werden müssen.

Die Datenkommunikation über ein Datennetz ist aufgrund der räumlichen Entfernung und der Herstellung einer entsprechenden Übertragungssicherheit zwischen Sender und Empfänger gegenüber einer direkten Datenkommunikation ohne zwischengeschaltetes Datennetz deutlich langsamer. Die Übertragungszeiten einer Datennetz-Kommunikation können durch Messung sogenannter Roundtrip Delay-Zeiten gemessen werden.

Einzig die Authentisierung für den durch die SIM-Karte repräsentierten Teilnehmer kann nicht lokal durch die SIM-Simulation durchgeführt werden. Dazu wird der Authentisierungsrechner benötigt, der über die Schnittstelle 18 und das Kartenlese-Modul 22 die Authentisierungsprozedur mit Hilfe der physikalischen SIM-Karte 21 durchfuhrt.

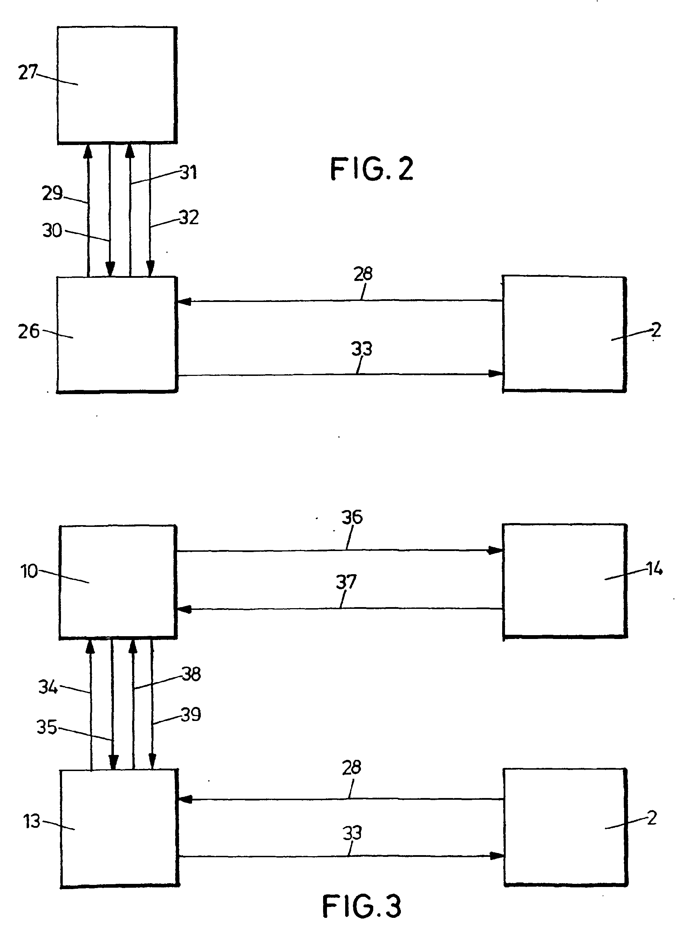

Für die Durchführung der Authentisierung kommt ein Authentisierungsverfahren zum Einsatz, welches das Ziel hat, die Anzahl der Kommunikationsschritte über die Fern-Signalverbindung zu reduzieren. Zum besseren Verständnis des Authentisierungsverfahrens sei nachfolgend zunächst die Authentisierung nach dem Stand der Technik anhand von Fig. 2 beschrieben:

Bei der Authentisierung gemäß der Anordnung der DE 198 21 929 C1, also nach dem Stand der Technik, steht ein Mobiltelefon 26 über ein dem Netz 3 vergleichbares Datennetz mit einer physikalischen SIM-Karte 27 einerseits und mit dem Mobilfunknetz 2 andererseits in Signalverbindung. Die Authentisierung nach dem Stand der Technik läuft dann folgendermaßen ab: Zunächst wird in einem Authentisierungsschritt 28 eine vom Mobilfunknetz 2 generierte Zufallszahl RAND vom Mobilfunknetz 2 an das Mobiltelefon 26 übermittelt. RAND wird anschließend in einem Authentisierungsschritt 29 an die physikalische SIM-Karte 27 übermittelt. Die physikalische SIM-Karte 27 übermittelt dann in einem Authentisierungsschritt 30 ein Bestätigungssignal OK an das Mobiltelefon 26. In einem Authentisierungsschritt 31 übermittelt das Mobiltelefon 26 eine Antwort-Aufforderungsgröße GET RESULT an die physikalische SIM-Karte 27. Nach dem Erhalt von GET RESULT übermittelt die physikalische SIM-Karte 27 in einem Authentisierungsschritt 32 SRES + K_{C} an das Mobiltelefon 26. Dieses leitet SRES + K_{C} dann in einem Authentisierungsschritt 33 an das Netz 3 weiter. Damit ist die Authentisierung nach dem Stand der Technik abgeschlossen. Diese bekannte Authentisierung nach Fig. 2 findet sich beispielsweise in der ISO 7816 Teil 3.

Bei der Authentisierung fallen nach dem Stand der Technik vier Kommunikationsschritte über das mit dem Netz 3 vergleichbare Datennetz an, nämlich die Authentisierungsschritte 29 bis 32.

Das erfindungsgemäße Authentisierungsverfahren wird nachfolgend unter Bezugnahme auf Fig. 3 beschrieben. Dort stehen, wie in Zusammenhang mit Fig. 1 schon beschrieben, der Simulationsrechner 10 und der Authentisierungsrechner 14 über ein Datennetz, nämlich das Netz 3, in Verbindung.

Der Authentisierungsschritt 28 entspricht dem nach Fig. 2. In einem Authentisierungsschritt 34 übermittelt das Mobiltelefon 13 dem Simulationsrechner 10 RAND. In einem Authentisierungsschritt 36 übermittelt der Simulationsrechner 10 dem Authentisierungsrechner 14 RAND. Im Authentisierungsrechner 14 wird anschließend unter Zuhilfenahme eines der Algorithmus-Module 19 bis 21 SRES + K_{C} berechnet. SRES + K_{C} wird dann in einem Authentisierungsschritt 37 an den Simulationsrechner 10 übermittelt. Danach übermittelt der Simulationsrechner 10 dem Mobiltelefon 13 in einem Authentisierungsschritt 35 ein Bestätigungssignal OK, welches die erfolgreiche Berechnung der Authentisierungs-Antwortgröße SRES + K_{C} bestätigt und gleichzeitig die Antwortlänge der berechneten Authentisierungs-Antwortgröße SRES + K_{C} mitteilt. In einem Authentisierungsschritt 38 erhält der Simulationsrechner 10 vom Mobiltelefon 13 die Antwort-Aufforderungsgröße GET RESULT. Die Authentisierungsschritte 36 und 37 zusammen mit der Berechnung von SRES + K_{C} im Authentisierungsrechner 14 können parallel zu den Authentisierungsschritten 35 und 38 erfolgen. Nach dem Authentisierungsschritt 38 übermittelt der Simulationsrechner 10 in einem Authentisierungsschritt 39 SRES + K_{C} an das Mobiltelefon 13. Der anschließende Authentisierungsschritt 33 entspricht demjenigen von Fig. 2.

Bei dem erfindungsgemäßen Authentisierungsverfahren fallen zwei Kommunikationsschritte über die Fern-Signalverbindung an. Dadurch kann auch bei sehr hohen Verzögerungszeiten bei der Übertragung über die Fern-Signalverbindung die Authentisierung zeitgerecht durchgeführt werden.

Das Testen von Übertragungsvorgängen im Mobilfunknetz 2 geschieht folgendermaßen: Zunächst wird das Mobiltelefon 13 an einen Ort gebracht, an dem der Test stattfinden soll. Der mit den gewünschten SIM-Daten ausgerüstete Simulationsrechner 10 wird dann an diesem Ort mit dem Mobiltelefon 13 verbunden. Anschließend wird, gesteuert durch den Steuerrechner 23, also entweder lokal beim Mobiltelefon 13 mit dem lokalen Steuermodul 25 oder zentral über das zentrale Steuermodul 24 der Test eingeleitet. Hierzu erfolgt entsprechend dem oben in Zusammenhang mit Fig. 3 Ausgeführten die Authentisierung des Mobiltelefons 13. Durch die entsprechende Auswahl einer SIM-Simulation, welche durch den Simulationsrechner 10 bereitgestellt wird, können verschiedene Arten des Zugangs zum Mobilfunknetz 2, zum Beispiel Roaming, getestet werden. Zudem ist es möglich, ausgewählte Betriebszustände, zum Beispiel "zwei Nutzer mit gleichen SIM-Daten", oder verschiedene Mobilfunknetze 2 zu testen. Natürlich muss die SIM-Simulation des Simulationsrechners 10 nicht zwingend eine physikalische Entsprechung in Form einer physikalischen SIM-Karte haben. Es ist daher möglich, mit dem Testsystem 1 zukünftige SIM-Techniken im Feld zu testen. Der Simulationsrechner 10 kann auch so ausgelegt sein, dass in ihm SIM-Daten zu einer Mehrzahl von SIM-Karten abgelegt sind.

Bedingt durch die jeweils ausgewählte SIM-Simulation oder aufgrund einer entsprechenden Vorgabe durch den Steuerrechner 23 wählt bei der Authentisierung der Authentisierungsrechner 14 ein Algorithmus-Modul 19 bis 21 aus. Die Kommunikation mit dem Algorithmus-Modul 21, also der physikalischen SIM-Karte, gestaltet sich dabei bei der erfindungsgemäßen Authentisierung im Vergleich zu derjenigen nach dem Stand der Technik wesentlich beschleunigt, da nicht nach dem Authentisierungsstandard gemäß ISO mit den beschriebenen vier Kommunikationsschritten über die Fernsignalverbindung vorgegangen zu werden braucht. Es reicht aus, im Rahmen von zwei Kommunikationsschritten zunächst RAND vom Authentisierungsrechner 14 an das Algorithmus-Modul 21 zu liefern (Kommunikationsschritt 1) und dann das vom Algorithmus-Modul 21 berechnete SRES + K_{C} zurück an den Authentisierungsrechner 14 zu übermitteln (Kommunikationsschritt 2).

Neben dem in Fig. 1 dargestellten Mobiltelefon 13 können noch andere Mobiltelefone gleichzeitig mit dem Simulationsrechner 10 zum Testen verbunden sein. Zudem ist es möglich, im Rahmen des Tests mehrerer Mobiltelefone 13 auch eine Mehrzahl von Authentisierungsrechnern 14 einzusetzen. Auch eine Mehrzahl von Simulationsrechnern 10 kann im Testsystem 12 vorgesehen sein. Natürlich können der Simulationsrechner 10 und/oder der Authentisierungsrechner 14 auch so ausgelegt sein, dass sie mit mehreren Mobiltelefonen 13 gleichzeitig kommunizieren können.

Der Simulationsrechner 10 und das lokale Steuermodul 25 können auch innerhalb eines Rechners integriert sein.

Durch den beschriebenen Test wird insbesondere die drahtlose Signalverbindung 13a zwischen dem Mobiltelefon 13 und dem Mobilfunknetz 2 getestet.

## Patentansprüche

1. Testsystem (1) zur Prüfung von Übertragungsvorgängen innerhalb eines Mobilfunknetzes (2)
- mit mindestens einem lokalen Mobiltelefon (13), welches so ausgestaltet ist, dass es mit einem Subscriber Identification Modul (SIM) kommunizieren kann,
- mit mindestens einer Übertragungseinheit (3), die mindestens eine dem Mobiltelefon (13) zugeordnete und mit diesem verbindbare lokale Übertragungseinheit (5) umfasst,
- mit einem lokalen SIM-Simulationsrechner (10) zur Bereitstellung einer SIM-Simulation, in dem SIM-Daten abgelegt sind und der mit der lokalen Übertragungseinheit (5) einerseits und über ein Adaptermodul (12) mit dem Mobiltelefon (13) andererseits verbunden ist,
- mit einem Steuerrechner (23) zur Steuerung eines Testablaufs, der mit der Übertragungseinheit (3) verbunden ist, und
- mit mindestens einem Authentisierungsrechner (14) zur Durchführung eines Authentisierungsalgorithmus zur Authentisierung des Mobiltelefons (13), der mit dem SIM-Simulationsrechner (10) verbunden ist, wobei der Simülationsrechner (10) derart ausgeführt ist,
-- dass im Simulationsrechner (10) SIM-Daten zu einer Mehrzahl von SIM-Karten abgelegt werden,
-- dass er mit einer Mehrzahl von Mobiltelefonen (13) verbunden werden kann.

2. Testsystem nach Anspruch 1, **dadurch gekennzeichnet, dass** der Authentisierungsrechner (14) über die Übertragungseinheit (3) mit dem Simulationsrechner (10) verbunden ist.

3. Testsystem nach Anspruch 1 oder 2, **dadurch gekennzeichnet, dass** der Simulationsrechner (10) derart ausgeführt ist, dass er physikalisch nicht vorhandene SIM-Karten simulieren kann.

4. Testsystem nach einem der Ansprüche 1 bis 3, **dadurch gekennzeichnet, dass** der Simulationsrechner (10) derart ausgeführt ist, dass er mit einer Mehrzahl von Authentisierungsrechnem (4) verbunden werden kann.

5. Testsystem nach einem der Ansprüche 1 bis 4, **dadurch gekennzeichnet, dass** der Authentisierungsrechner (14) derart ausgeführt ist, dass er mit einer Mehrzahl von Simulationsrechnem (10) verbunden werden kann.

6. Testsystem nach einem der Ansprüche 1 bis 5, **dadurch gekennzeichnet, dass** der Authentisierungsrechner (14) derart ausgeführt ist, dass er eine Mehrzahl von Authentisierungsalgorithmen (19 bis 21) durchführen kann.

7. Testsystem nach einem der Ansprüche 1 bis 6, **dadurch gekennzeichnet, dass** der Authentisierungsrechner (14) derart ausgeführt ist, dass er zur Berechnung einer Authentisierungs-Antwortgröße mit einer physikalischen SIM-Karte (21) verbunden werden kann.

8. Verfahren zur Authentisierung eines Mobiltelefons (13) in einem Mobilfunknetz (2) unter Verwendung eines Testsystems (1) nach einem der vorhergehenden Ansprüche mit folgenden Schritten:
- Generieren einer Zufallszahl RAND durch das Mobilfunknetz (2),
- Übermitteln (28) von RAND vom Mobilfunknetz (2) an das Mobiltelefon (13),
- Übermitteln (34) von RAND vom Mobiltelefon (13) an den Simulationsrechner (10),
- Übermitteln (36) von RAND vom Simulationsrechner (10) an den Authentisierungsrechner (14),
- Berechnen einer Authentisierungs-Antwortgröße SRES + K_{C} aus dem RAND und mindestens einer weiteren, der SIM-Simulation individuell zugeordneten Kenngröße im Authentisierungsrechner (14),
- Übermitteln (37) von SRES + K_{C} vom Authentisierungsrechner (14) an den Simulationsrechner (10),
- Übermitteln (35) eines Bestätigungssignals OK, welches die erfolgreiche Berechnung der Authentisierungs-Antwortgröße SRES + K_{C} bestätigt und gleichzeitig die Antwortlänge der berechneten Authentisierungs-Antwortgröße SRES + K_{C} mitteilt, vom Simulationsrechner (10) an das Mobiltelefon (13),
- Übermitteln (38) einer Antwort-Aufforderungsgröße GET RESULT vom Mobiltelefon (13) an den Simulationsrechner (10),
- Übermitteln (39) von SRES + K_{C} vom Simulationsrechner (10) an das Mobiltelefon (13),
- Übermitteln (33) von SRES + K_{C} vom Mobiltelefon (13) an das Mobilfunknetz (2).

## Claims

1. A test system (1) for checking transmission processes in a mobile radio network (2),
- incorporating at least one local mobile telephone (13) that is implemented in such a way that it can communicate with a Subscriber Identification Module (SIM),
- incorporating at least one transmission unit (3) comprising at least one local transmission unit (5) assigned to the mobile telephone (13) and connectable to the same,
- incorporating a local SIM simulation computer (10) for providing a SIM simulation, in which SIM data are stored and which is connected to the local transmission unit (5) on one hand and via an adapter module (12) to the mobile telephone (13) on the other hand,
- incorporating a control computer (23) for controlling a testing operation, which is connected to the mobile radio network (3), and
- incorporating at least one authentication computer (14) for carrying out an authentication algorithm for authenticating the mobile telephone (13), said authentication computer being connected to the SIM simulation computer (10), wherein the simulation computer (10) is implemented in such a way
-- that in the simulation computer (10), SIM data are being stored for a plurality of SIM cards,
-- that it can be connected to a plurality of mobile telephones (13).

2. A test system according to claim 1, **characterized in that** the authentication computer (14) is connected via the transmission unit (3) to the simulation computer (10).

3. A test system according to any of claims 1 or 2, **characterized in that** the simulation computer (10) is implemented in such a way that it can simulate SIM cards that are not physically available.

4. A test system according to any of claims 1 through 3, **characterized in that** the simulation computer (10) is implemented in such a way that it can be connected to a plurality of authentication computers (4).

5. A test system according to any of claims 1 through 4, **characterized in that** the authentication computer (14) is implemented in such a way that it can be connected to a plurality of simulation computers (10).

6. A test system according to any of claims 1 through 5, **characterized in that** the authentication computer (14) is implemented in such a way that it can carry out a plurality of authentication algorithms (19 through 21).

7. A test system according to any of claims 1 through 6, **characterized in that** the authentication computer (14) is implemented in such a way that it can be connected for the calculation of an authentication response value to a physical SIM card (21).

8. A method for authenticating a mobile telephone (13) in a mobile radio network (2) using a test system (1) according to any of the above claims, comprising the following steps:
- generation of a random number RAND by the mobile radio network (2),
- transmission (28) of RAND from the mobile radio network (2) to the mobile telephone (13),
- transmission (34) of RAND from the mobile telephone (13) to the simulation computer (10),
- transmission (36) of RAND from the simulation computer (10) to the authentication computer (14),
- calculation, in the authentication computer (14), of an authentication response value SRES + K_{C} from the RAND and at least one additional characteristic value that is individually assigned to the SIM simulation,
- transmission (37) of SRES + K_{C} from the authentication computer (14) to the simulation computer (10),
- transmission (35) of an acknowledgement signal OK, which acknowledges the successful calculation of the authentication response value SRES + K_{C} and at the same time reports the response length of the calculated authentication response value SRES + K_{C}, from the simulation computer (10) to the mobile telephone (13),
- transmission (38) of a response request value GET RESULT from the mobile telephone (13) to the simulation computer (10),
- transmission (39) of SRES + K_{C} from the simulation computer (10) to the mobile telephone (13),
- transmission (33) of SRES + K_{C} from the mobile telephone (13) to the mobile radio network (2).

## Revendications

1. Système de test (1) pour vérifier des processus de transmission au sein d'un réseau de radiotéléphonie mobile (2);
- avec au moins un téléphone mobile local (13) qui est conçu de façon à pouvoir communiquer avec un Subscriber Identification Modul (SIM),
- avec au moins une unité de transmission (3), qui comprend au moins une unité de transmission locale (5) associée au téléphone mobile (13) et pouvant être reliée à ce dernier,
- avec un ordinateur de simulation local SIM (10), pour la mise à disposition d'une simulation SIM, dans lequel les données SIM sont sauvegardées et qui est relié d'une part avec l'unité de transmission locale (5) et d'autre part, par l'intermédiaire d'un module adaptateur (12) avec le téléphone mobile (13),
- avec un ordinateur de commande (23) pour commander un cycle de test, qui est relié avec unité de transmission (3), et
- avec au moins un ordinateur d'authentification (14) pour réaliser un algorithme d'authentification pour authentifier le téléphone mobile (13), qui est relié avec l'ordinateur de simulation SIM (10), l'ordinateur de simulation (10) étant conçu de façon telle:
- que des données SIM pour une pluralité de cartes SIM soient sauvegardées dans l'ordinateur de simulation (10),
- qu'il puisse être aussi relié avec une pluralité de téléphones mobiles (13).

2. Système de test seulement la revendication 1, **caractérisé en ce que** l'ordinateur d'authentification (14) est relié avec l'ordinateur de simulation (10) par l'intermédiaire de l'unité de transmission (3).

3. Système de test selon la revendication 1 ou 2, **caractérisé en ce que** l'ordinateur de simulation (10) est conçu de façon à pouvoir simuler des cartes SIM, qui physiquement ne sont pas présentes.

4. Système de test selon l'une quelconque des revendications 1 à 3, **caractérisé en ce que** l'ordinateur de signalisation (10) est conçu de façon à pouvoir être relié avec une pluralité d'ordinateurs d'authentification (4).610

5. Système de test selon l'une quelconque des revendications 1 à 4, **caractérisé en ce que** l'ordinateur d'authentification (14) est conçu de façon à pouvoir être relié avec une pluralité d'ordinateurs de simulation (10).

6. Système de test selon l'une quelconque des revendications 1 à 5, **caractérisé en ce que** l'ordinateur d'authentification (14) est conçu de façon à pouvoir réaliser une pluralités d'algorithmes d'authentification (19 à 21).

7. Système de test selon l'une quelconque des revendications 1 à 6, **caractérisé en ce que** l'ordinateur d'authentification (14) est conçu de façon à pouvoir être relié avec une carte SIM physique (21), pour le calcul d'une valeur de réponse d'authentification.

8. Procédé d'authentification d'un téléphone mobile (13) dans un réseau de radiotéléphonie mobile (2) en utilisant un système de test (1) selon l'une quelconque des revendications précédentes, avec les étapes suivantes :
- génération d'un nombre aléatoire RAND par le réseau de radiotéléphone (2),
- transmission (28) de RAND du réseau de radiotéléphonie mobile (2) au téléphone mobile (13),
- transmission (34) de RAND du téléphone mobile (13) à l'ordinateur de simulation (10),
- transmission (36) de RAND de l'ordinateur de simulation (10) à l'ordinateur d'authentification (14),
- calcul d'une valeur de réponse d'authentification SRES + K_{c} à partir de RAND et d'au moins une autre valeur caractéristique individuellement associée à la simulation SIM dans l'ordinateur d'authentification (14),
- transmission (37) de SRES + K_{c} de l'ordinateur d'authentification (14) à l'ordinateur de simulation (10),
- transmission (35) d'un signal de confirmation OK qui confirme le calcul avec succès de la valeur de réponse d'authentification SRES + K_{c} et qui simultanément indique la longueur de réponse de la valeur de réponse d'authentification calculée, de l'ordinateur de simulation (10) au téléphone mobile (13),
- transmission (38) d'une valeur de demande de réponse GET RESULT du téléphone mobile (13) à l'ordinateur de simulation (10),
- transmission (39) de SRES + K_{c} de l'ordinateur de simulation (10) au téléphone mobile (13),
transmission (33) de SRES + K_{c} du téléphone mobile (13) au réseau de radiotéléphonie mobile (2).
